# EUROPEAN PATENT SPECIFICATION

(11) **EP 2 567 289 B1**
(45) Date of publication and mention of the grant of the patent: **29.04.2020**
(21) Application number: 11778280.5
(22) Date of filing: 04.05.2011
(51) Int. Cl.: G03B 17/00, F16M 11/10, F16M 11/18, F16M 11/42, G03B 17/56, H04N 5/232, F16M 11/04, F16M 11/26, F16M 11/20, H04N 5/225

(54) **CAMERA HEAD**
KAMERAKOPF
BLOC DE CAMÉRA

(30) Priority: 14.05.2010 US 780793; 04.05.2010 US 773327
(43) Date of publication of application: 13.03.2013
(73) Proprietor: Chapman/Leonard Studio Equipment, Inc., North Hollywood California 91605 (US)
(72) Inventor: CHAPMAN, Leonard, T., North Hollywood, California 91605 (US); GORBATOV, Stanislov, North Hollywood, California 91605 (US)
(74) Representative: Schaumburg und Partner Patentanwälte mbB
(86) International application number: PCT/US2011/035227
(87) International publication number: WO 2011/140245

(56) References cited:
- DE-T5-112015 003 939
- US-A- 3 788 585
- US-A1- 2001 045 991
- US-A1- 2002 031 348
- US-A1- 2005 185 089
- US-A1- 2009 148 150
- US-A1- 2009 207 250
- US-A1- 2010 079 101
- US-B1- 6 608 461

## Description

### BACKGROUND

The field of the invention is camera head or supports.

In motion picture, television or video filming or recording, the camera is often supported on a vehicle, to follow an action or moving sequence, or to achieve a desired camera angle or effect. Various specialized camera cars, camera trucks, cranes, and dollys have been used for this purpose. Generally, although the camera may be moving, it is important for the camera to be maintained in a steady or stable position. In the most basic form, camera stability has been achieved by mounting the camera on a tri-pod. However, when the camera itself is mounted on and moves with a vehicle, maintaining camera stability often becomes difficult.

To reduce or eliminate undesirable lens movement, various camera platform or camera head stabilization systems have been proposed. Generally, these systems sense undesired lens movement. A computer controller then operates electric motors linked to the camera platform. The electric motors move the platform to try to cancel out the undesired lens movement and keep the lens steady and aimed as desired.

A remote camera head is an apparatus that allows the camera to be moved, aimed, or controlled from a remote location (i.e., a location not immediately behind the camera). Typically, a remote camera head is mounted on a camera crane. The crane can move the camera head, and the camera on the head, into locations not accessible using conventional camera operations (i.e., with a camera operator behind the camera and controlling camera movement by hand). The remote camera head can perform pivoting or rotational movement in three axes, known as pan, tilt, and roll. Electric motors on or in the remote camera head are remotely controlled (via cables or wireless links) by a camera head operator, typically on the ground, or on the vehicle supporting the crane arm. Operation of the camera itself is similarly remotely controlled.

The electric motors may also be linked to a stabilization system, so that steady and accurate aiming of the camera is not disturbed by the movement of the vehicle supporting the camera. Gyro-stabilized camera heads have been used to reduce or avoid unwanted movement of the lens, while also allowing the lens to aim as desired about two or three axes. Typically, camera stabilization systems use sensors on a camera head connected to a computer/controller. The controller controls the electric motors based on outputs from the sensors, to try to keep the camera platform in a stable angular position relative the pan, tilt and roll axes.

From the United States patent application published under the publication number US 2009/0148150 A1 a camera head according to the precharacterizing part of claim 1 is known. Further, from the US patent US 3788585 A an adjustable length arm in an apparatus holding a camera is known.

While existing camera stabilization systems and camera heads have met with varying degrees of success, various engineering challenges remain in designing improved camera stabilization systems and camera heads. This and other objects are achieved by the features in the characterizing part of claim 1. Advantageous embodiments are claimed in the dependent claims 2-12.

In one aspect of the invention, a camera support or head has a pan frame pivotably attached to a support hub. The support hub is attached to a camera crane or similar apparatus. The pan frame has first and second spaced apart and parallel adjustable length pan arms. A pan motor is attached to the pan frame and adapted to pivot the pan frame about a pan axis relative to the support hub. A tilt frame is pivotably attached to the pan frame. The tilt frame may include first and second spaced apart and parallel adjustable length tilt arms attached to opposite ends of a camera mounting plate. A tilt motor is attached to the tilt frame and to the pan frame and is adapted to pivot the tilt frame about a tilt axis perpendicular to the pan axis. The adjustable length tilt arms allow the camera head to extend to accommodate cameras requiring more vertical clearance. The adjustable length tilt arms allow the camera platform to be moved to better locate the center of gravity of the camera on the tilt axis, for more balanced loading.

In another aspect of the invention, a system for stabilizing a camera platform has a pan frame pivotally attached to a support, such as a crane arm. A tilt frame is pivotally attached to the pan frame. A sensor is located on a camera platform of the tilt frame for sensing a change in angular position about the tilt axis. A tilt axis motor is linked to the camera platform. A control system includes a first feedback loop including the sensor, a tilt axis amplifier, the tilt axis motor, and a tilt axis first error calculator that receives the sum of an output from the platform sensor and a platform tilt position controller. The platform tilt position controller may be a hand wheel set that the camera operator uses to aim the camera. A second tilt axis feedback loop of the control system includes a tilt axis motor encoder, the tilt axis amplifier, the tilt axis motor, and a tilt axis second error calculator receiving an output from the tilt axis encoder. The tilt axis amplifier drives the tilt axis motor based on the amplified sum of the calculated first and second error values. This same concept may be similarly used in the same way for stabilization about the pan axis and about the roll axis.

A method for stabilizing a camera platform advantageously includes generating a first signal from a platform sensor on the camera platform indicative of a change in angular position of the camera platform. The first signal is added to a control signal provided from a camera platform position controller, typically operated by the camera operator. A first correction value based on the sum of the first signal and the control signal is calculated. A second correction value is calculated based on a signal from an encoder associated with a motor linked to the camera platform. Adding the first correction value and the second correction value provides a motor control signal which is amplified and used to control the motor.

Other objects and advantages will appear below. The invention resides as well in subsystems and sub combinations of the elements and steps described.

### BRIEF DESCRIPTION OF THE DRAWINGS

In the drawings, the same elements in different figures are indicated with the same element number.
Fig. 1 is a side view of the new camera head supported on a telescoping camera crane.
Fig. 2 is a front view of the new camera head.
Fig. 3A is a side view of the camera head shown in Fig. 2.
Fig. 3B is an enlarged detail view of the adjustment holes in Fig. 3A.
Fig. 4 is a top view.
Fig. 5 is a side view of the camera head shown in Fig. 2, but with the camera head now in an extended position.
Fig. 6. is a side view of the camera head as it is shown in Fig. 5.
Fig. 7 is a front view of the camera head of Fig. 2 but with side extensions added to accommodate a wider payload.
Fig. 8 is a top view of the camera head as it is shown in Fig. 7.
Fig. 9 is an enlarged detail view of the tilt frame as shown in Fig. 7.
Fig. 10 is an enlarged detail view of the attachment hub shown in Fig. 2.
Fig. 11 is bottom view looking up of the connector plate shown in Fig. 2.
Fig. 12 is a front view of an alternative design including roll frame.
Fig. 13 is a partial section view taken along line 13-13 of Fig. 12, which components omitted for clarity of illustration.
Fig. 14 is a top view of the roll frame drive motor assembly shown in Fig. 12.
Fig. 15 is an end view of the roll frame drive motor assembly shown in Fig. 14.
Fig. 16 is a front view of the outer pan arm plate shown in Fig. 2.
Fig. 17 a side views of the outer pan arm plate shown in Fig. 16.
Fig. 18 is a section view taken along line 18-18 of Fig. 16.
Fig. 19 is a front view of the center pan plate shown in Fig. 2.
Fig. 20 is a schematic diagram of a control system for use in the camera head .
Fig. 21 is a side view of a wheel controller.
Fig. 22 is a front view of the wheel controller shown in Fig. 21.
Fig. 23 is a partial top view of the wheel controller shown in Fig. 21.
Fig. 24 is a side view of one of the controller units of the wheel controller shown in Fig. 21.
Fig. 25 is a top view of the controller unit shown in Fig. 24.
Fig. 26 is a front view of the controller unit shown in Fig. 24

### MECHANICAL DETAILED DESCRIPTION

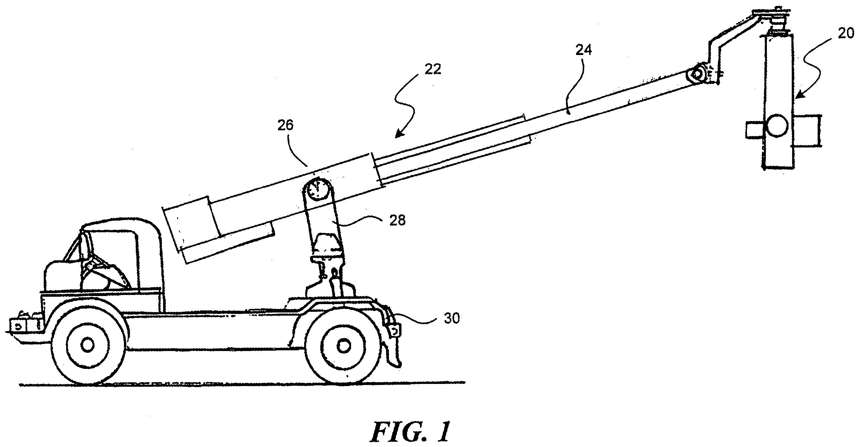

As shown in Fig. 1, a camera head 20 is supported on the arm 24 of a camera crane 22. The camera crane 22 may pivot vertically on an axle 26 attached to a U-frame 28 on a mobile crane base or vehicle 30. The U-frame 28 typically can pivot on the vehicle to move the crane 22 horizontally (in azimuth). The head 20 may optionally be supported on a fixed base, or it may be supported on a smaller vehicle such as a camera dolly.

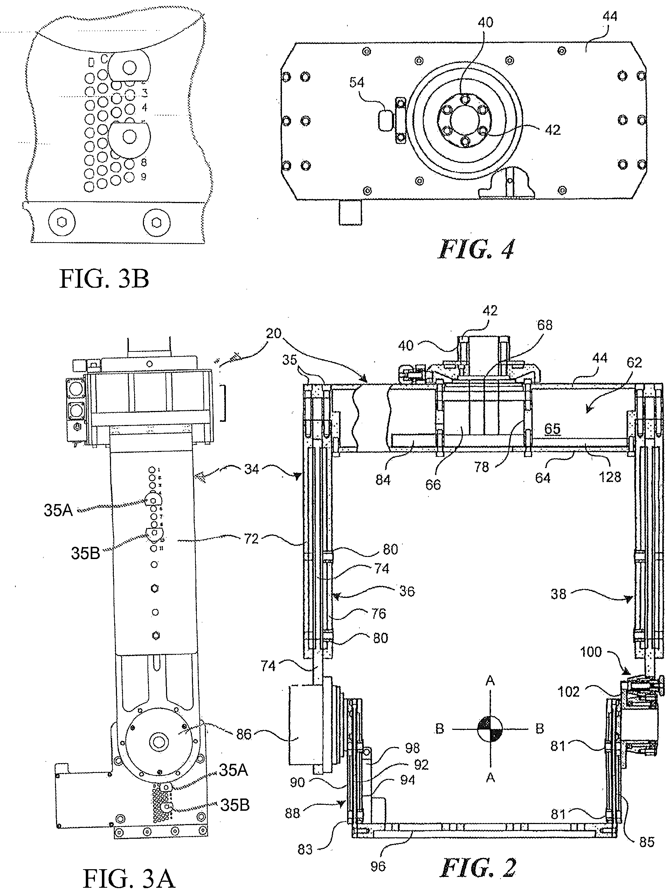

Turning to Figs. 2, 3A, 3B and 4, the camera head 20 includes a pan frame 34 pivotally supported on a hub 40, and a tilt frame 88 supported on the pan frame. The axes of lens movement are generally referred to as the pan and tilt axes, with the third axis, if used, being a roll axis. Pan movement refers to a change in azimuth. Tilt movement refers to change in the lens angle of elevation. Roll movement refers to movement about an axis co-linear with or parallel to the axis of the lens.

In Figs. 2-4, the hub 40 may have threaded stud or bolt for attaching the head 20 to the crane 22 or other support structure. The pan frame 34 includes a head housing or frame 62 which may include a head plate 44 and a connector plate 64 both attached (e.g., bolted) to a pan motor housing 78. Side plates may be attached to the head plate 44 and the connector plate 64 to provide a head housing 62 enclosing an electronics box or compartment 65. The plates forming the electronics box 65 may be welded, brazed, or bolted together to form a rigid and watertight structure. The box 65 may be sealed with o-rings and similar fittings so that the box is watertight. The box 65 may also be positively pressurized with air or another gas, such as nitrogen via a gas valve.

A pan motor 66 is attached to the pan motor housing 78 on or in the head housing 62 . A shaft 68 of the pan motor is attached to the hub 40, typically via cap screws 42. Consequently, when the pan motor 66 is actuated, the pan motor applies torque causing the pan frame 34 to pivot about a pan axis AA relative to the fixed hub 40. A pan gyro sensor 84 is provided on or in the head housing, or elsewhere on the pan frame 34, for sensing movement of the pan frame about the pan axis. The head housing 62 may alternatively be a simple plate, extrusion, or other structure.

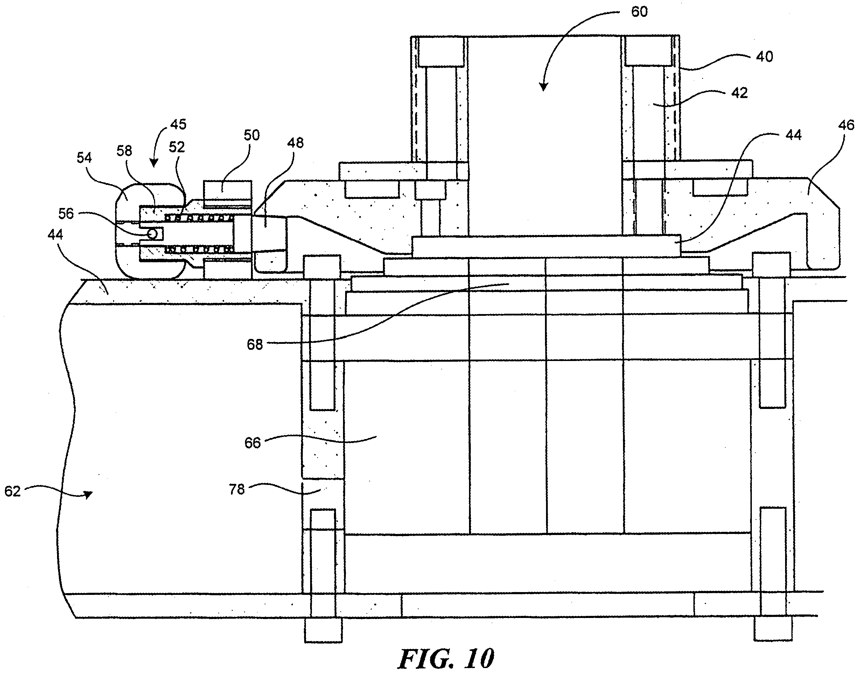

Referring momentarily to Fig. 10, a pan axis lock 45 may be provided to lock the pan frame 34 at a desired angular position relative to the hub 40. If used, the pan axis lock 45 may include an index pin 48 supported within a pin receiver 58 and biased radially inwardly by a compression spring 52. The pin receiver 58 may be secured in place on the head plate 44 via a pin frame 50. A release pin 56 extends perpendicularly through the outer end of the index pin 48. A finger knob 54 is attached to the outer end of the index pin 48. An index ring 46 fixed to the hub 40 has radially spaced apart holes, for example, 12 holes spaced apart by 30 degree increments. As shown in Fig. 10, with the index pin 48 in the lock position, the inner end of the index pin extends radially into a hole in the index ring 46. This prevents any pivoting movement of the pan frame 34. To release the pan frame and allow for panning movement, the user pulls the finger knob 54 radially outward against the spring force. This movement withdraws the index pin 48 from the index ring. The user then turns the finger knob one quarter turn, causing the release pin 56 to rest on the end of the receiver 58, instead of in the slot as it is shown in Fig. 10. The release pin 56 consequently holds the index pin 58 away from the index ring 46, against the force of the spring 52. The pan frame 34 is then free to pivot about the pan axis.

Referring once again to Figs. 2-4, the pan frame 34 may have a generally inverted U-shape formed via two spaced apart pan arms 36 and 38 attached to the head housing 62. The pan arms 36 and 38 may be formed via straight flat plates attached at or near the opposite ends of the head housing 62. In the specific design shown, the pan arms 36 and 38 are parallel to each other and each pan arm has an outer pan arm plate 72 and an inner pan arm plate 76, with a slot or groove between them. A center pan plate 74 is slidably or telescopically positioned between the outer and inner pan arm plates, in each pan arm 36 and 38. Pan frame position elements 80, such as bolts extending through slots or holes in the center pan plate 74, may be used to lock the center pan plate 74 in position. Alternatively, the positioning elements 80 may press against a side surface of the center pan plate 74, to clamp it in place. Other positioning elements such as levers, cams, pins, etc. may also be used to lock the center pan plate 74 into a desired position. The length of the pan arms 36 and 38 may be adjusted by loosening or releasing the positioning elements 80, sliding the center pan plate 74 on each pan arm 36 and 38 into the desired position, and then re-engaging or re-tightening the positioning elements. Index marks, such as a millimeter/centimeter scale, may be provided on the center plan plates 74 to provide a visual indication of the length of the pan arms.

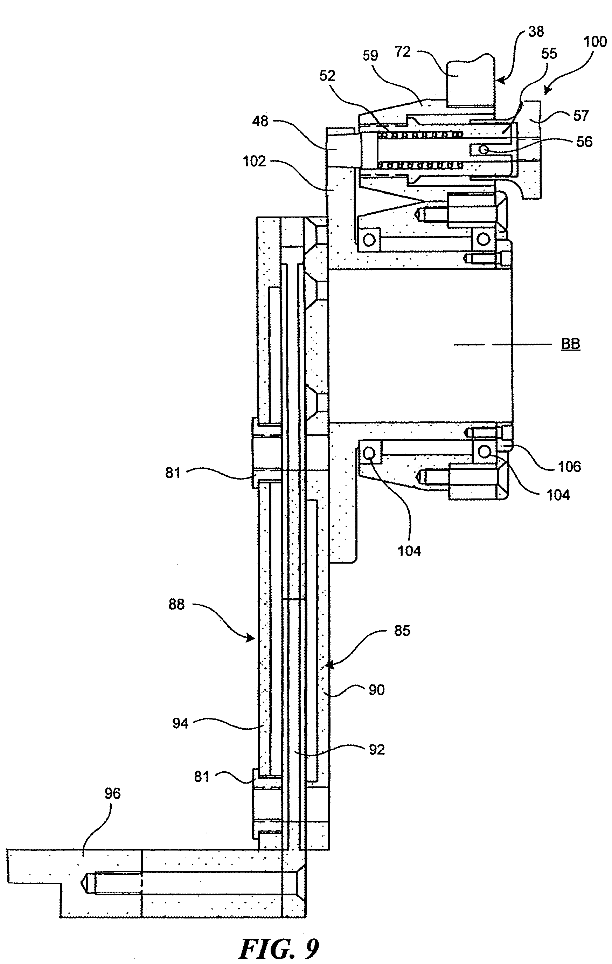

As shown in Figs. 2 and 3A, a tilt axis motor 86 is attached near the lower end of the center pan plate 74 of the first pan arm 36, and a tilt hub 102 is attached near the lower end of the center pan plate 74 of the second pan arm 38. A tilt frame 88 is attached to the tilt axis motor 86 and to the tilt hub 102. Turning also now to Fig. 9, the tilt frame 88 includes a camera mounting plate 96 attached to the lower ends of first and second tilt arms 83 and 85. The tilt arms 83 and 85 may be made to have an adjustable length in the same way as the pan arms 36 and 38 as described above. Specifically, each tilt arm 83 and 85 may include an outer tilt arm plate 90 and an inner tilt arm plate 94, with a slot or groove formed between them. A center tilt plate 92 may be positioned between the outer and inner tilt plates. The camera mounting plate 96 is then attached to the lower end of each center tilt plate 92. Tilt frame positioning elements 81, which may be the same as the pan positioning elements 80, hold the center tilt plates 92 at a desired position. The camera mounting plate 96 has holes and slots to accommodate mounting a camera and accessories. A tilt axis gyro sensor 98 may be attached to the first tilt arm 83, to sense motion about the tilt axis.

The pan frame may be considered as including the head housing 62, the pan arms 36 and 38, including the center pan plates 74, the tilt motor 86 and the tilt hub 102. These are the elements that rotate together about the pan axis AA, but do not move with the tilt frame. The tilt motor 86 may optionally be located on the tilt frame, with the shaft of the tilt motor attached to the center plate 74 of the pan arm 36. In this case, the tilt motor would be part of the tilt frame and not the pan frame. Generally though, improved results are achieved with the tilt motor 86 on the pan frame and not on the tilt frame, since this reduces the weight of the tilt frame, and simplifies wiring to the tilt motor 86..

Referring still to Fig. 9, the tilt frame 88 may have a tilt axis lock 100, which may be similar to the pan axis lock 45 described above. If used, the tilt axis lock 100 may include the tilt hub 102 supported on bearings 104 at the lower end of the second pan arm 38 and provided with multiple circumferentially spaced apart holes. An end cap 106 is attached to the outer end of the hub 102 to secure the hub in place on the tilt arm center plate 72. An index pin 48 is biased outwardly from a tilt pin barrel 55 via a compression spring 52. The tilt pin barrel is secured within a tilt pin receiver 59 on the center pan plate 72.

A release pin 56 extends perpendicularly through the outer end of the index pin 48 within a slot in the outer end of the tilt pin barrel 55. A finger knob 57 is attached to the outer end of the index pin 48. As shown in Fig. 9, with the index pin 48 in the lock position, the inner end of the index pin extends radially into a hole in the index tilt hub 102. This prevents any pivoting movement of the tilt frame 88. To release the tilt frame and allow for tilting movement of the camera platform plate, the user pulls the finger knob 57 out against the spring force. This movement withdraws the index pin 48 from the index tilt hub 102. The user then turns the finger knob 57 one quarter turn, causing the release pin 56 to rest on the end of the receiver 55, instead of in the slot as it is shown in Fig. 9. The release pin 56 consequently holds the index pin 48 away from the index tilt hub 102, against the force of the spring 52. The tilt frame 88 is then free to pivot about the tilt axis BB.

In use, the head 20 is attached to a camera crane 22 or similar support, as shown in Fig. 1. The hub 40 may have a threaded stud section that attaches to a mounting plate on the crane 22. Regardless of the attachment technique used, the hub or equivalent structure of the head is irrotatably attached to the crane. Typically, the head 20 may initially be oriented at a zero degree straight ahead position relative to the crane. A camera is then mounted on the camera mounting plate 96. The pan axis lock 45 and the tilt axis lock 100 may be engaged to prevent movement of the camera platform 96, making it easier to attach the camera to the mounting plate 96. Although Fig. 1 shows the head 20 suspended below the crane in an underslung position, the head 20 may optionally be set up in an overslung position, with the crane supporting the head from below. In an overslung position, the head 20 would appear as inverted from Figs. 2 and 3, with the tilt frame 88 vertically above the pan frame 34 and the hub 40 at the bottom of the head 20.

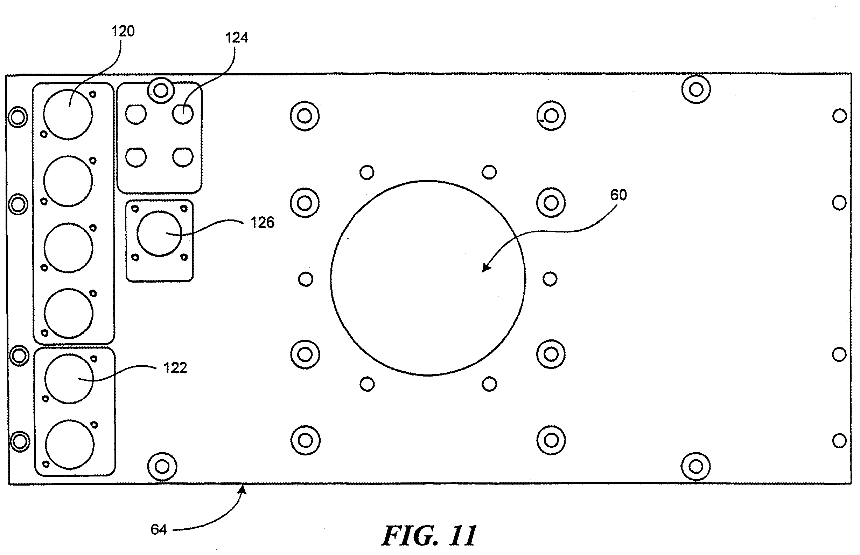

Power and control cables from the camera may be routed through a central opening in the tilt motor 86 and/or the tilt hub 102, alongside either pan arm, and plugged into connectors 120, 122, 124 and 126 on the connector plate, shown in Figs. 2 and 11. A primary cable may then run from one or more of the connectors, or from within the electronics box 65, up through the hub 40 and back on the crane 22 to a control panel on the vehicle base 30, or to a tethered portable control panel held by the camera operator. A wireless link may alternatively be used for control signals. With the camera installed, the pan and tilt axis locks 45 and 100 are disengaged. As the crane 22 moves, the gyro sensors 84 and 98 detect movement of the pan and tilt frames, and provide corresponding signals to a computer controller 128, which may be in the electronics box 65. The computer controller 128 then controls the pan motor 66 and tilt motor 86 to keep the camera platform 96 in a desired position. The computer controller 128 may control current supplied to the pan motor 66 to control the direction, speed and acceleration of panning movement. The computer controller may similarly controls current supplied to the tilt motor 86. The pan and tilt motors 66 and 86 may be harmonic drive motors which inherently are highly compact, have little or no backlash, and provide high reduction ratios without conventional gearing.

Various cameras may be mounted on the camera mounting plate 96, with sufficient clearance on all sides to avoid interference between the camera and the head 20. However, certain larger camera installations require additional space. The additional clearance space may be required due to the size of the camera itself, or due to an accessory, such as a film magazine on the camera. The head 20 has adjustable length pan arms 36 and 38 to accommodate larger camera set ups. Referring to Figs. 2 and 3, as the tilt angle of the camera mounting platform 96 changes, sufficient vertical clearance is required to avoid contact between the connector plate 64 and the top of the camera or film magazine. If necessary, the spacing between the camera mounting platform 96 and the connector plate 64 may be increased, to provide additional clearance.

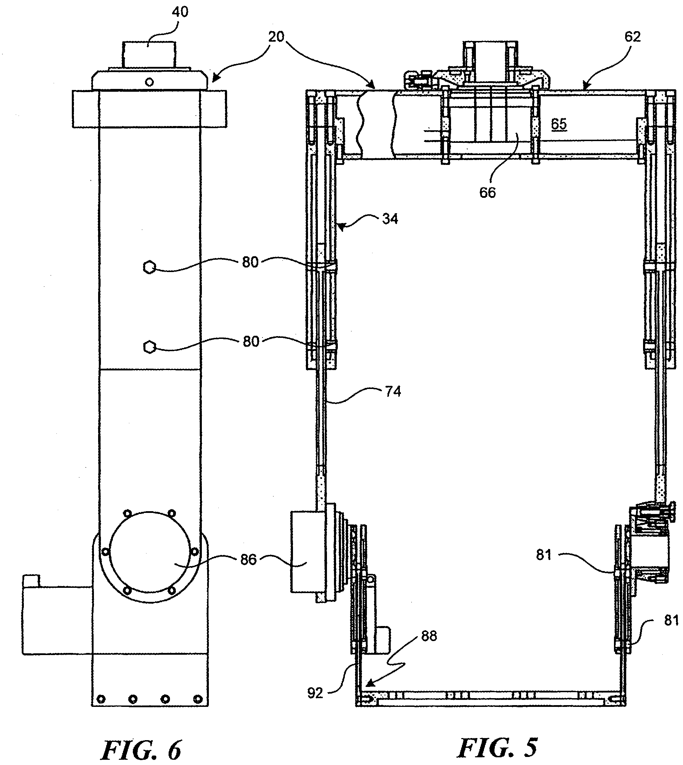

This may be accomplished by temporarily loosening or releasing the positioning elements 80, such as cap screws, on both pan arms 36 and 38. The tilt frame 88 is then moved downwardly or away from the connector plate 64, with the center pan plate 74 sliding partially out from between the inner and outer pan plates 72 and 76, on each pan arm 36 and 38. In a typical design, this may increase the length of the pan arms by 10-20 cm. Figs. 5 and 6 show the head 20 with the pan arms at a maximum length position. With the tilt frame at the desired position, the positioning elements are re-tightened or re-engaged, to once again securely hold the tilt frame vertically in place relative to the pan frame.

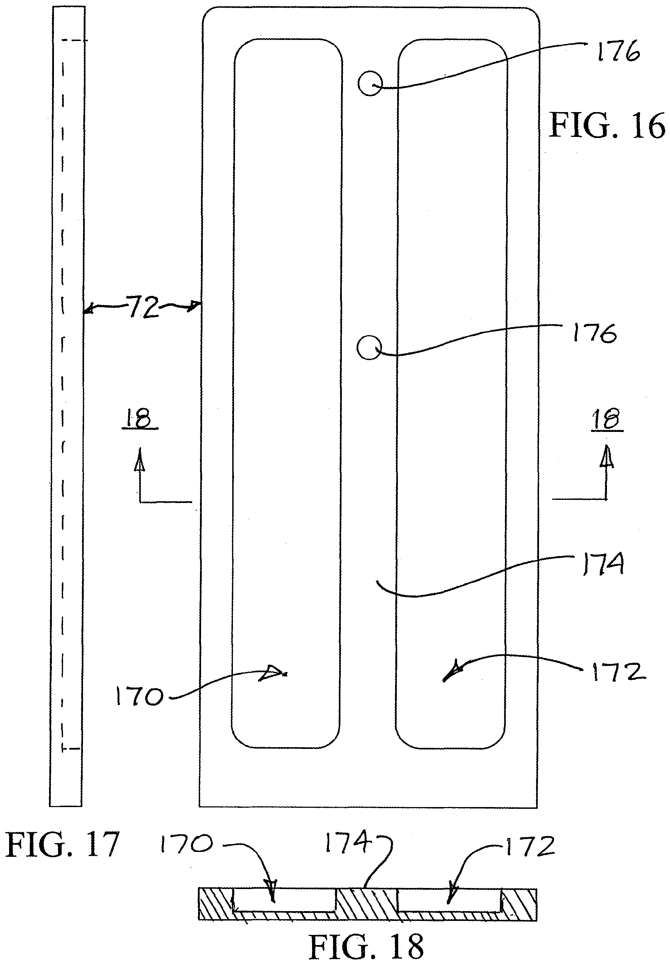

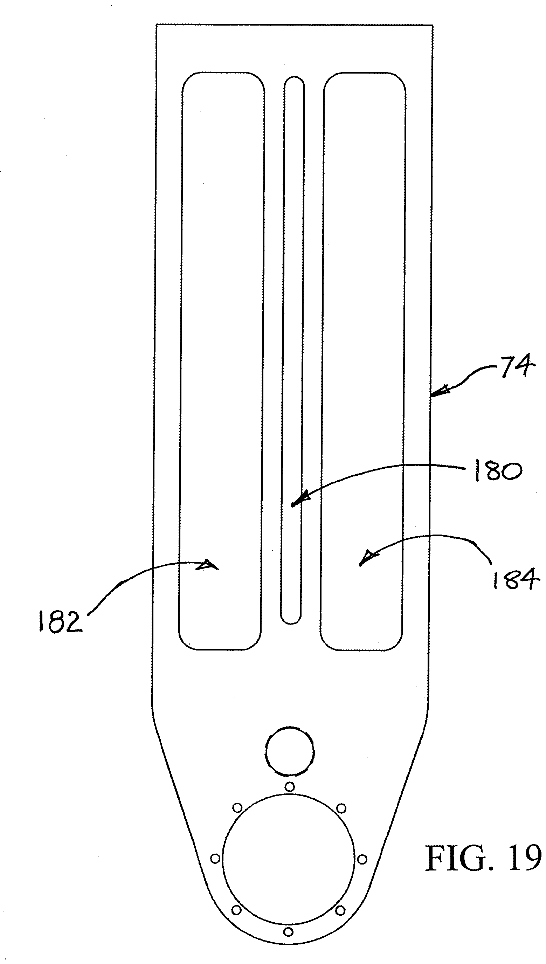

One way of making the pan arms with adjustable length is shown in Figs. 16-19. Fig. 16 is a front view of an outer pan arm plate 72. The outer pan arm plate 72 may be formed from a generally rectangular plate. Blind recesses 170 and 172 may be provided on either side of a central land area 174, to provide a lightweight, yet rigid structure. The inner pan arm plate 76 may have the same design as shown in Fig. 16, optionally with threaded bolt holes 176. Fig. 19 shows a front view of a center pan plate 74 which may have through-cutouts 182 and 184 on either side of a central land area. The positioning elements or bolts pass through a center slot 180. The recesses 170 and 172 align over the cutouts 182 and 184. When tightened, the bolts 80 compress and clamp the central land area of the center pan plate 74 between the land areas 174 of the inner and outer pan arm plates. This securely holds the tilt frame in place.

In this way, cameras of varying size may used on the head 20. Of course, various other designs may be used to equivalently vary the length of the pan arms, including designs using screw threads, extending linkages, telescoping pole sections, ratcheting devices, etc. A pin may extend through a slot in the center pan plate 74 in each pan arm 36 and 38, to prevent the center plates 74 from withdrawing fully and separating from the pan arms. This prevents the tilt frame 88 from accidentally dropping off of the pan frame 34. The positioning elements, such as cap screws 80, may be loosened, the tilt frame moved to a desired position, and the cap screws 80 the retightened, in very little time. This allows the head 20 to be quickly changed over into a desired configuration.

Referring to Figs. 3A and 3B, each one of a pair of quick release pins 35A and 35B may be placed into one of a set of vertically spaced apart positioning holes 1-11 shown Fig. 3A, and pass through the slot 180 in the center pan plate, and into a corresponding hole in the inner pan arm plate 76, on each side of the pan frame. The first or upper pin 35A bears against the upper end of the slot 180, preventing the center pan plate from dropping down when the positioning bolts 80 are loosened to adjust the vertical position of the tilt frame 88. The second or lower pin 35B is placed into the desired positioning hole 1-11 on each side of the pan frame 34. The upper pin 35A on each side is then removed and the center pan plates 74 supporting the tilt frame 88 are lowered down until the upper end of the slot 180 contacts the second pin 35B. The first pin 35A is then placed into one of the positioning holes 1-11 below the second pin 35B (with the second pin 35B then becoming the lower pin). Use of the pairs of pins 35A and 35B makes it easier to adjust the vertical position. The pins 35A and 35B may be used with or without the positioning bolts 80. Positioning may also be achieved with a single pin on each side, by removing the pin, sliding the tilt frame to the desired position, and then replacing the pin.

As shown in Fig. 3B, a pattern of tilt frame positioning holes may be provided through the inner and outer tilt arm plates 90 and 94, to allow for very fine adjustment of the camera mounting plate 96 relative to the tilt axis BB in Fig. 2. In Fig. 3B, an array of holes in four columns D, C, B and A and rows 1-9 is shown. The holes in the columns may spaced apart by, for example, by 6 mm. The holes in each column may be offset vertically from the holes in adjacent columns by for example 1 or 2 mm. The center tilt arm plates 94 have four vertical slots, with each column of holes aligned with one of the vertical slots. Quick release pins 35A and 35B may be used to adjust the vertical position of the camera mounting plate in the same way as described above. However, via use of the array of holes, vertical adjustments of 1 or 2 mm increments may be made. This allows the center of gravity of the payload on the camera platform (the camera and any accessories) to be more precisely positioned on the tilt axis BB, to better balance the payload.

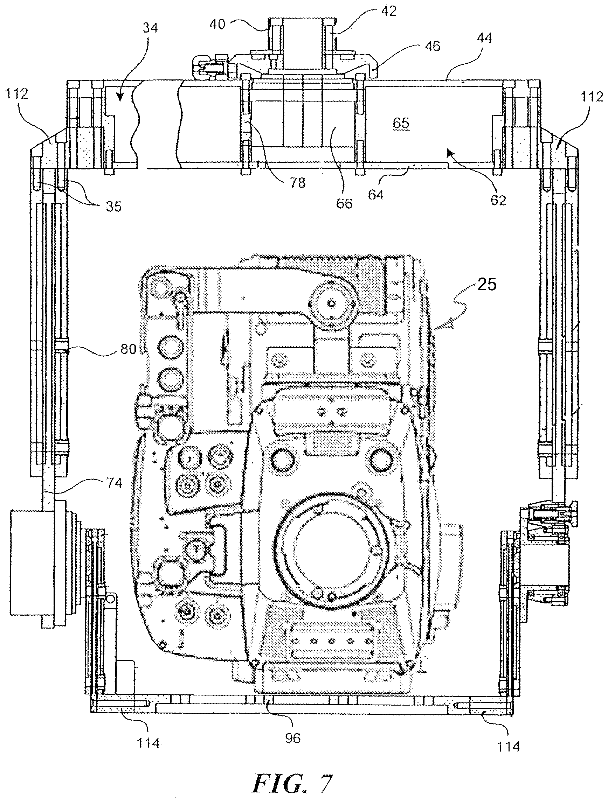

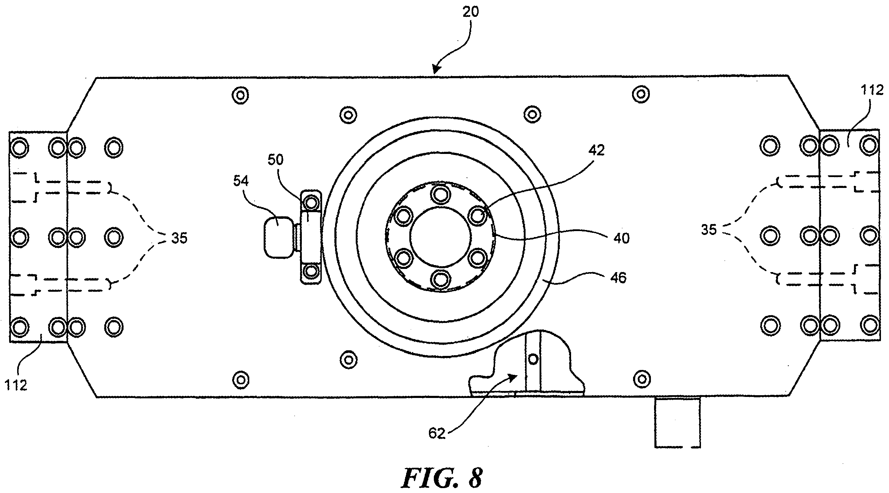

The head 20 may also be set up to accommodate an overly wide camera set up. Referring to Figs. 7 and 8, to provide additional width within the head 20, the pan arms 36 and 38 are temporarily removed from the head housing 62 of the pan frame 34. The cap screws 35 attaching the pan arms to the head housing 62 are backed out to allow the pan arms to separate. Side bars 112 are then attached to head housing 62 via cap screws extending laterally through the side bars and into threaded holes on opposites sides of the head housing 62, as shown in Fig. 8. The pan arms are then attached to the side bars 112, as shown in Fig. 7. Plate extensions 114 are also installed at each end of the camera mounting plate 96, to extend the width of the tilt frame. As shown in Figs. 7 and 8, the head 22 is then widened to accommodate a wider camera. The amount of width extension may be varied by selecting the dimensions of the side bars and the plate extensions. Typically, and extension of 1-4 on each side, for a total width increase of 5-20 cm, is sufficient for handling most payloads.

In a standard set up, the head 20 is used as shown in Fig. 2, without side bars and plate extensions, and with no extension of the pan arms. This provides the most compact configuration, which is generally preferable, unless a larger configuration is needed to accommodate an oversize camera. The compact configuration shown in Fig. 2 is has a lower moment of inertia in comparison to expanded configurations. This allows for better aiming or steering control, and better gyro stabilization of the head, since less controlling or corrective torque is required from the motors. Generally, a lower moment of inertia allows for faster and more effective corrective movements of the pan and tilt frames. In addition, since the standard configuration shown in Fig. 2 is more compact, the head 20 is more easily maneuvered in tight spaces, for example, in moving the head through a window or a door to achieve a desired camera shot.

Fig. 2 shows the tilt frame 88 is the standard position, with no extension provided via the adjustable length tilt arms 83 and 85. Fig. 5 shows the tilt frame 88 with the tilt arms adjusted outwardly or extended to a maximum length. In the configuration shown in Fig. 5, the camera platform 96 is from 5-15 cm further from the tilt axis BB than in Fig. 2. The adjustable length tilt arms may be used to shift the center of gravity of the payload or camera as need to better align it on the tilt axis. This helps to avoid eccentric loading on the tilt frame. Locating the center of gravity of the payload on the tilt axis BB minimizes the moment of inertia of the payload. Consequently, the torque required from the tilt motor 86 to provide tilt frame movements is reduced.

With most professional cameras, the center of gravity of the camera is aligned along an axis passing nearly centrally through the lens of the camera. Ordinarily, it is then desirable to be able to align the lens of the camera on the tilt axis BB, as well as on the pan axis AA, to achieve a centrally balanced load on the head, with a minimized moment of inertia about both the pan and tilt axes. The adjustable length tilt arms allow for this adjustment. Of course, in some cameras the center of gravity may be displaced from the axis of the lens. In other cases, accessories attached to the camera can also shift the center of gravity. In these cases, the load may be balanced with the lens offset from the tilt axis BB.

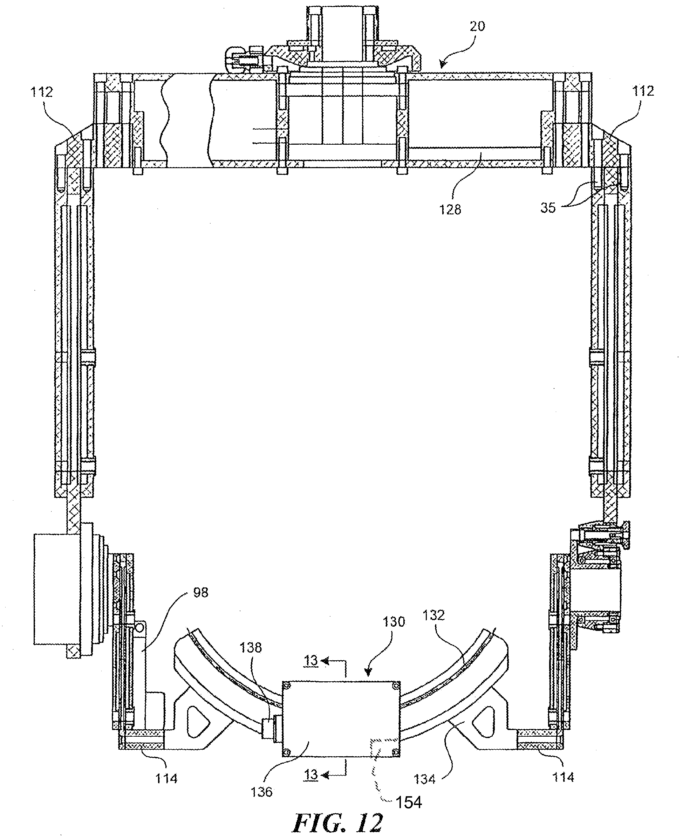

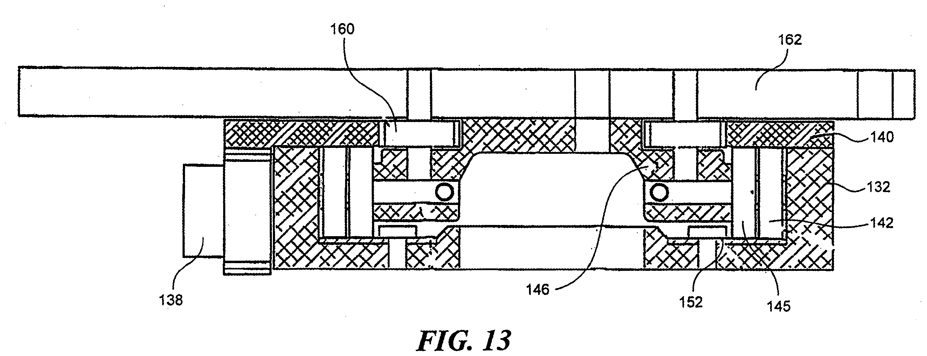

Figs. 2 and 3 show a two-axis camera head 20. The camera head 20 can move the camera platform about two axes, the pan axis AA and the tilt axis BB. Fig. 12 shows conversion of the two axis camera head of Fig. 2 into a three axis camera head. In Fig. 12, the camera platform or camera mounting plate 96 is removed and replaced with a roll frame 130. As shown in Figs. 12 and 13, the roll frame 130 has a curved track 132 with a constant radius of curvature, typically ranging from about 15 to 30 cm. The track 132 is attached to the tilt frame 88 via track arms 134 attached to plate spacers on the lower ends of the tilt arms.

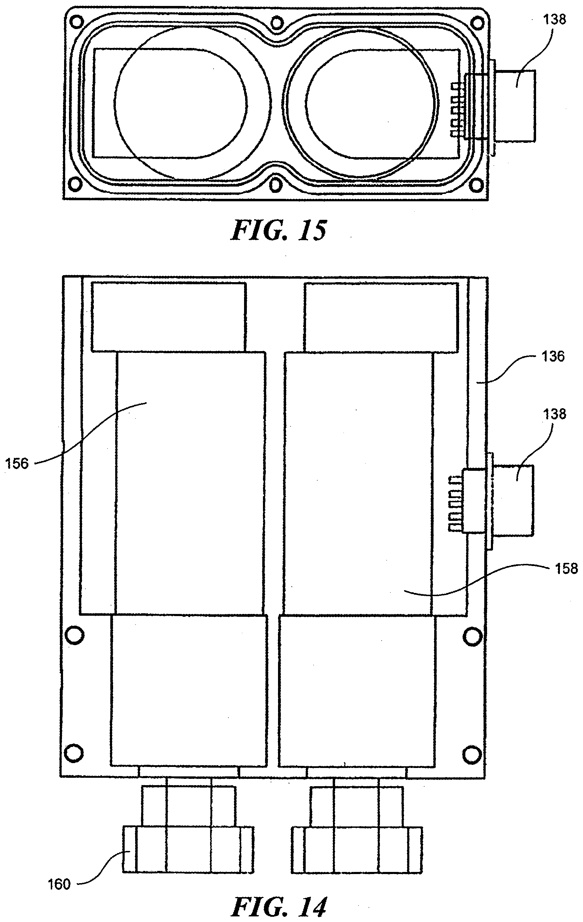

Turning now also to Figs. 13-15, a carriage 146 includes a roll motor housing 136 contains first and second roll motors 156 and 158, each driving a gear 160 meshed with a rack on the track 132. Outer rollers 142 on the carriage 146 roll on a steel liner 152 on a lower surface of the track 132. Inner rollers 145 roll on a down facing upper surface of the track 132. The surfaces of the track that the rollers 142 and 145 roll on may be precisely machined so that while the rollers may be supported on a common axle, they only actually contact the lower and upper track surfaces, respectively. This avoids backlash or play between the camera mounting plate 162 and the track 132. The rollers are round, with the flat circumferential surfaces of the rollers rolling on a flat surface of the track. This reduces rolling friction in comparison to V-groove and dove tail designs. The rollers are machined to close tolerances since gyrostabilization is negated if there is play between the motors and the payload. A cover plate 140 extends over the top of the rollers 142 to prevent the carriage 146 from lifting off of the track 132. A top surface of the carriage 146 forms a camera mounting plate 162. Power and control signals are provided to the motors 156 and 158 from the controller 128 via a cable linked to a connector 138 on the roll motor housing 136. The cable has sufficient slack to avoid restraining movement of the carriage on the track. A roll axis sensor 154, such as a gyro-sensor senses acceleration of the camera platform about the roll axis.

In use, the motors 156 and 158 may be controlled to move the carriage 146 along the track to provide roll movement of a camera mounted on the plate 162. Referring back to Fig. 12, if the lens of the camera is aligned at the center of curvature of the track when the camera is mounted on the plate 162 of the roll axis carriage 146, then movement of the carriage on the track 132 will cause the camera to pivot around the optical axis of the lens, changing only the angle between the camera and the horizon, but without actually displacing the lens vertically or horizontally. If the camera is mounted on the plate 162 with the lens of the camera off set from the center of curvature, then movement of the carriage along the track will result in actual translational movement of the lens, as well as rotational movement.

### ELECTRICAL CONTROL DETAILED DESCRIPTION

The camera head 20 is a substantially rigid structure. The pan motor housing 78 (or the shaft of the pan motor, depending on the design) is rigidly attached to and pivots with the pan frame 34. Similarly, the shaft of the tilt motor 86 (or the housing of the tilt motor, depending on the design) is rigidly attached to and pivots with the tilt frame 88. However, it has now been discovered that even with rigidly built camera heads, the motor shaft and the camera platform do not move together. Rather, there is a slight lag or delay between movement of the motor shaft and movement of the camera platform. This delay occurs because while the torsional moment of inertia of the mechanical linkage between the motor shaft and the camera platform may be high, there is still a small amount of elastic strain or windup. In highly precise stabilization systems, this delay can result in erroneous feedback correction, instability and resonance of the mechanical system or linkage. These factors degrade the performance of the stabilization system. The delay is proportional to the torque applied by the motor. Accordingly, in a high gain system where higher torque is applied to try to achieve fast corrective movements, the delay and the disadvantages caused by the delay are greater.

It has been discovered that motor or shaft encoders are not necessarily accurate indicators of the actual position of the pan frame 34, the tilt frame 88 or the camera mounting plate 96. It has been further discovered that improved results can be achieved by sensing movement or position of a head component, such as the camera mounting plate 96, via a sensor located on the camera mounting plate, as well as sensing the position of the motor shaft. By sensing the position of both the motor shaft and the camera platform, the electronic or computer controller 128 can operate at high gain and provide fast corrective movements, with the system remaining stable. Resonance of the camera platform is avoided. Since the delay can now be detected, the controller 128 can be programmed to compensate for it. The controller 128 operates an algorithm that calculates the difference in position between the motor shaft and the camera platform, and then uses the difference in calculating the instantaneous current applied to the motor. A dual loop feedback control system is based on this concept.

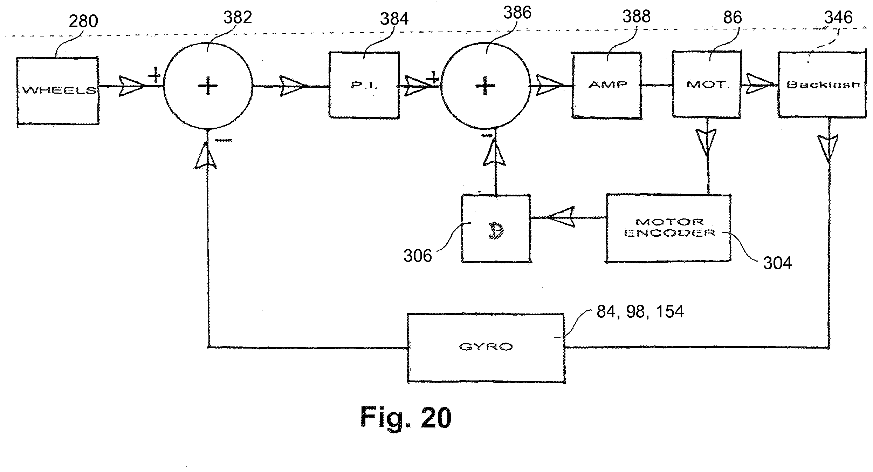

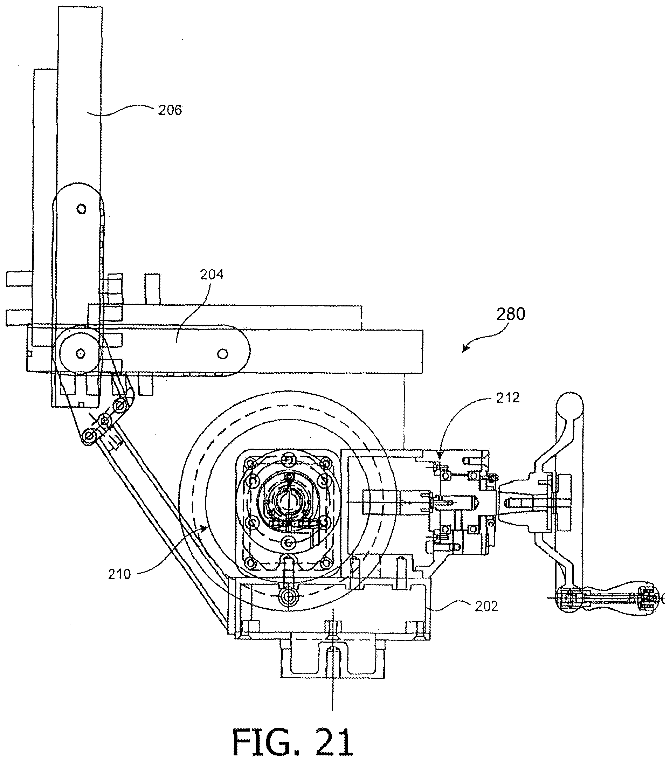

Turning to Fig. 20, the dual loop feedback control system for the tilt frame 88 is described. A sensor such as a gyro sensor 98 is mounted on the camera mounting plate 96, as shown in Fig. 2. Movement of the camera mounting plate 96 about the tilt axis causes the sensor 98 to output a signal to a first summing circuit 382. The first summing circuit 382 adds the output signal from the sensor 98 to a control signal from a head control or wheel unit 280. The wheel control unit 280 is used by the camera operator to aim the camera as desired. The summing circuit output signal is provided to a proportional/integral controller 384 which calculates a proportional/integral error signal, based on the input it receives from the first summing circuit 382. The proportional/integral or first correction signal is input into a second summing circuit 386 and then to an amplifier 388 which drives the tilt motor 86. This forms the first feedback control loop. Element 346 in Fig. 21 is shown with a dotted line to the box labeled "Backlash" to show that the motor shaft and the camera mounting plate 96 are not necessarily consistently at the same precise angular position.

The proportional/integral controller 384 calculates a proportional error value based on the difference between the desired or intended position of the camera mounting plate 96, and the current actual position of the camera plate as detected by the sensor 98. The proportional/integral controller also calculates an integral error value based on the sum of recent proportional error values. These values may then be weighted and combined to provide the first correction signal.

An encoder 304 on the shaft of the tilt motor 86 senses the angular position or movement of the motor shaft and generates a corresponding motor shaft signal. The motor shaft signal is output to a derivative controller 306 which calculates a second correction signal. The second correction signal may be the derivative of the motor shaft signal. The second correction signal is input to the second summing circuit 386 where the first and second correction signals may be weighted and then added together to create a motor control signal. The motor control signal is amplified and used to drive the tilt motor 86. The second feedback loop accordingly includes the motor encoder 304, the derivative controller 306, the second summing circuit 386, the amplifier 388 and the motor 86. The controllers 384 and 304, and optionally the summing circuits as well may be provided in a single module computer controller 128. The electronic components in the design shown are contained within the electronics box 65.

The description above may similarly be used on the pan axis in a head having two-axis stabilization, or with a head as shown in Fig. 12 for three-axis stabilization. For a three-axis camera head, the roll axis sensor 154 can be provided on or in the roll motor housing 136. The roll axis sensor 154, like the pan and tilt axis sensors, may be a gyro sensor or a MEMS sensor. A flex cable runs from the computer controller 128 to the roll motor housing 136 to provide power and signal connections. The pan and tilt axis motors and sensors are also connected to the computer controller 128, with the wiring connections omitted from the drawings for clarity of illustration. Alternative positions of the motors can of course be used, with either the motor shaft or the motor housing being fixed in place relative to the other. The motors may be harmonic drive motors to provide zero backlash and high reduction ratios.

The control system shown in Fig. 20 may optionally be operated purely in an encoder mode where the sensors 84, 98 and optionally 154 are not used. In the encoder mode, feedback from the encoder is provided to the computer controller which calculates a single correction signal. The single correction signal is amplified and used to drive the motor.

The computer controller 128 and the dual loop control system shown in Fig. 20 may also include adjustable electronic dampening. The dampening may be preset based on motor characteristics, the structural characteristics of the head 20, and/or the payload (the camera 25 plus accessories, if any) carried on the head. The computer controller 128 may also include drift compensation. Drift is slow and undesired movement occurring over relatively longer periods of time (typically several minutes or hours) due to tolerances in the control system and/or external factors. The computer controller 128 may detect and compensate for drift.

A memory function may also be included in the computer controller 128. The memory function allows programmed head movements to be uploaded and stored in the computer controller 128. The controller may then recall and execute the programmed head movements as desired. This allows a specific sequence of head movements to be precisely repeated. The computer controller 128 may alternatively record head movements as they occur, and store the movements in memory for later use.

The dual loop system shown in Fig. 20 splits the proportional/integral/derivative (PID) feedback function into two separate subsystems. The proportional and integral functions operate on a signal from the gyro (or other sensor) on the camera platform, forming a main feedback loop. The derivative function operates on a signal from the motor shaft encoder, forming a secondary feedback loop. This secondary loop allows the main feedback loop to operate at a higher gain for increased torque applied to the camera platform. This results in fast corrective movements and more precise control of the position of the camera platform. Without the secondary loop, the system would tend to oscillate, especially at a high gain, due to the delay between shaft movement and camera platform movement.

The dual loop control system may also be used in other camera stabilization applications apart from camera heads. For example, the dual loop control system may also be used on other types of camera supports, such as camera cranes and camera dollies. For example, in International Patent Publication WO/2005/085948, a camera crane has a hydraulically driven telescoping arm, and a valve controls operation of hydraulic cylinders. The hydraulic cylinders drive telescoping movement of the crane arm. The shaft of an electric motor is linked to the shaft of the hydraulic valve. Due to torsional flexing of the shaft linkage, there is a delay between movement of the motor shaft and movement of the valve shaft. The disadvantages to the control system resulting from this delay are the same as described above. Control of the camera crane is improved by sensing the position of the motor shaft with a first sensor and also sensing the position of the valve shaft with a second sensor, to allow for detection of and compensation for the delay be the control system.

In a camera crane application, a motor shaft sensor or encoder is associated with the motor shaft to sense the motor shaft position or a change in angular position of the motor shaft. A valve shaft sensor or encoder is associated with the valve shaft to sense the valve shaft position or a change in angular position of the valve shaft. The first feedback loop includes the motor shaft sensor, an amplifier, the motor, and a proportional and integral error calculator receiving the sum of an output from the valve shaft sensor and a valve controller. A second feedback loop includes the motor shaft sensor or encoder and a derivative calculator receiving an output from the motor shaft encoder. The amplifier drives the motor based on the amplified sum of the output from the derivative calculator and the proportional and integral error calculator.

Figs. 21-26 show an example of a three-axis wheel control unit 280 which may be used with the head 20 and control systems described above. The wheel control unit 280 may be used by the camera operator to control the head 20 to aim the camera 25 as desired. The wheel control unit 280 may be mounted on the vehicle 30 or used as a stand alone unit. The wheel control unit 280 is linked to the head via a cable or through a wireless connection. A remote monitor 206, if used, is linked to the camera and displays the image recorded by the camera.

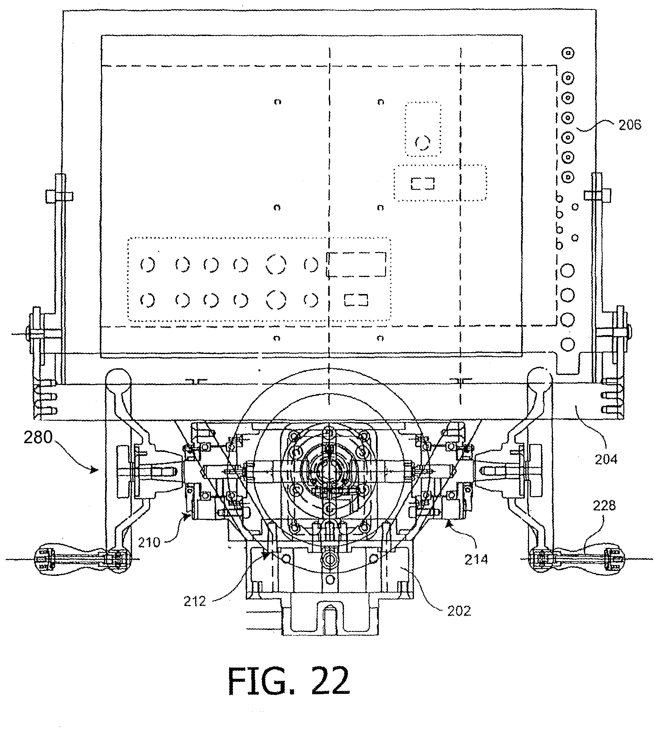

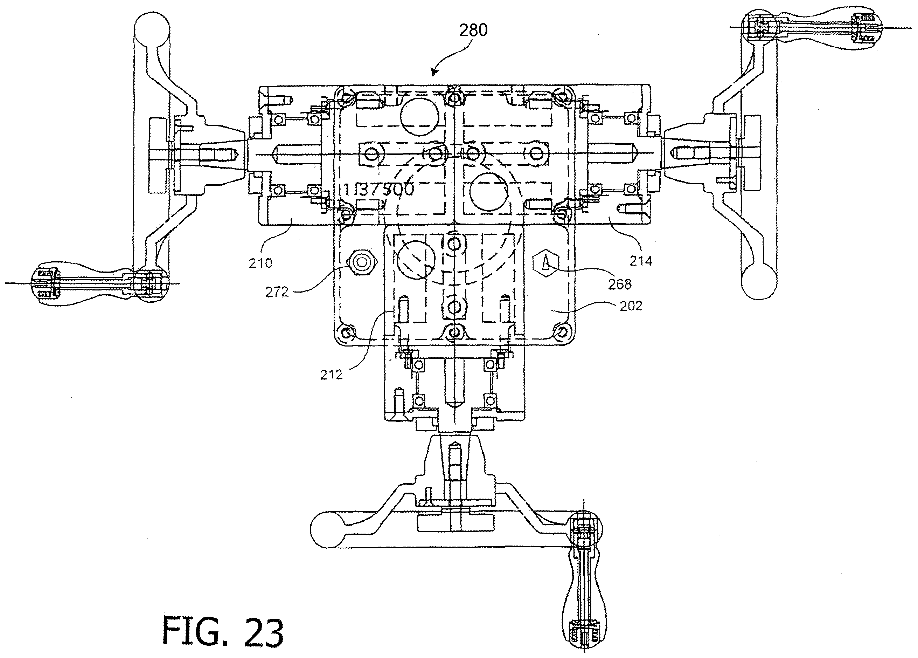

As shown in Figs. 21 and 22, the wheel control unit 280 has a pan axis control unit 210, a tilt axis control unit 212 and a roll axis control unit 214 supported on a base 202. The wheel control unit 280 may optionally also include a stand or platform for holding a monitor 206. As shown in Fig. 23, the pan control unit 210 is parallel to and aligned back-to-back with the roll axis unit 214. The tilt axis unit 212 is perpendicular to the pan and roll axis units, and generally centered on them. Also as shown in Fig. 23, a reset switch 268 may be provided on the unit 280. An I/O connector 272 may also be provided to allow the controller unit 280 to connect with other equipment, such as a computer.

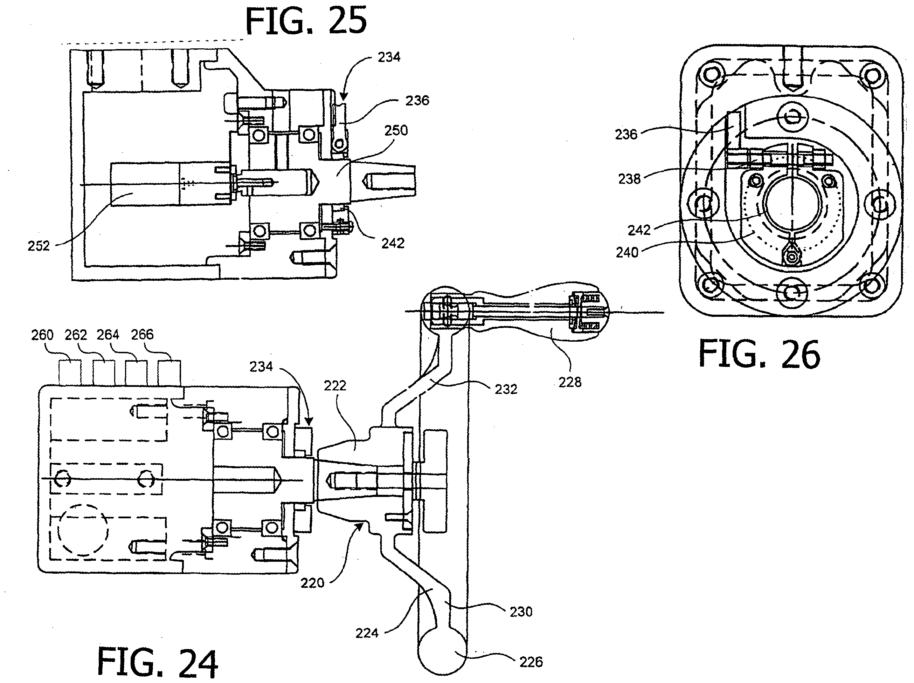

The control units 210, 212, and 214 may be the same, with each control unit otherwise set up to control movement of the head in one of the three axes. Figs. 24-26 show a control unit, which may be used for the pan, tilt or roll control units. As shown in Fig. 24, a handle 228 is rotatably attached to the rim 226 of a wheel 220. A flange 224 extends from a handle hub 222 to the rim 226. The handle 228 would ordinarily shift the balance of the wheel off center. However, the flange is made thicker at areas 224 opposite from the handle 228, and the flange is made thinner at areas 232 adjacent to the handle 228. This keeps the wheel balanced. The rim 226 may be made uniform all around, since the rim is handled by the user and advantageously should provide a uniform grasping surface.

The control unit 280 may include potentiometers to adjust various controls. These may include a speed adjustment 260 which adjusts the ratio between movement of the wheel 220 and movement of the corresponding frame of the head. A dampening adjustment 262 may also be provided to adjust dampening of head movements. Increased dampening smoothes out starting and stopping movements. A limit set switch 264 can be used to set end or stop positions. A direction switch 266 can be used to reverse the direction of head movement relative to the wheel movement.

The control unit 280 may include a drag assembly 234 to add drag to movement of the wheel 220. In general, the wheel 220 can turn relatively freely, as the shaft 250 is mounted on bearings. This allows the wheel to be turned with a very slight hand or finger movement. Some camera aiming movements however may be more easily carried out with more drag on the wheel. In addition, as a matter of personal preference, some camera operators may prefer more drag. As shown in Figs 25 and 26, a split clamp ring 240 surrounds the shaft 250. A pin extends through the upper ends of the split clamp ring 240 and is attached to a cam 238. A lever 236 is engaged with the cam 238. With the lever 236 in the up position as shown in Fig. 26, the drag assembly 234 is disengaged and adds no drag to turning movement of the shaft 250. To add drag, the lever 236 is pulled down. This requires only a light and short finger movement by the operator. Moving the lever down causes the cam to move the sides of the clamp ring 240 towards each other. This in turn brings an o-ring into contact with the shaft 250, creating a uniform amount of added drag on rotation of the wheel 220.

## Claims

1. A camera support (20) having a support hub (40), a pan frame (34) pivotably attached to the support hub (40), with the pan frame (34) including a head plate (44) having a first end and a second end, a first pan arm (36) attached at the first end of the head plate, a second pan arm (38) attached at the second end of the head plate, with the second pan arm (38) substantially parallel to the first pan arm (36), a pan motor (66) attached to the pan frame (34) and adapted to pivot the pan frame (34) about a pan axis relative to the support hub (40), a tilt frame (88) pivotably attached to the pan frame (34), with the tilt frame (88) including a camera mounting plate (96), a first tilt arm (83) attached at a first end of the camera mounting plate (96), a second tilt arm (85) attached at a second end of the camera mounting plate (96), with the second tilt arm substantially parallel to the first tilt arm, and a tilt motor (86) attached to the tilt frame and adapted to pivot the tilt frame about a tilt axis perpendicular to the pan axis,
**characterized in that**:
the first and second pan arms (36, 38) and the first and second tilt arms (83, 85) are first and second adjustable length pan arms (36, 38) and first and second adjustable length tilt arms (83, 85);
the first adjustable length pan arm (36) includes a center plate (74) slidably positionable between an outer pan arm plate (72) and an inner pan arm plate (76);
an electronics box (65) is attached to head plate (44), with the pan motor (66) enclosed within the electronics box (65); and
a cable opening extends through a central opening in the support hub (40) and the pan motor (66), and a cable harness is routed through the cable opening and electrically connects to the electronics box (65).

2. The camera support of claim 1 with the tilt motor (86) supported at a lower end of the first adjustable length pan arm (36).

3. The camera support of claim 1 wherein the first tilt arm (83) is parallel to the first adjustable length pan arm (36) and the second adjustable length tilt arm (85) is parallel to the second adjustable length pan arm (38).

4. The camera support of claim 1 wherein the first and second adjustable length tilt arms (83, 85) are positioned between the first and second adjustable length pan arms (36, 38).

5. The camera support of claim 1 further **characterized by** a pan lock pin (48) on the pan frame (34) moveable from a first position wherein the pan lock pin engages the support hub (40) and prevents movement of the pan frame relative to the support hub, to a second position wherein the pan lock pin is disengaged from the support hub to allow pivoting movement of the pan frame relative to the support hub.

6. The camera support of claim 1 further **characterized by** a first pan frame extension bar (112) between the first adjustable length pan arm and the first end of the head plate, and a second pan frame extension bar (112) between the second adjustable length pan arm and the second end of the head plate, with the first and second pan frame extension bars increasing a spacing between the first and second adjustable length pan arms by a dimension DD, and a first plate extension (114) between the first adjustable length tilt arm and the first end of the camera mounting plate, and a second plate extension (114) between the second adjustable length tilt arm and the second end of the camera mounting plate, with the first and second plate extensions increasing a spacing between the first and second adjustable length tilt arms also by a dimension DD.

7. The camera support of claim 1 with the camera mounting plate comprising a roll frame (130) attached to the tilt frame (88), with the roll frame including a curved track (132), and a carriage (146) moveable along the curved track, with the carriage including at least one roll axis motor (156, 158) adapted to move the carriage along the curved track.

8. The camera support of claim 7 with the curved track including a toothed gear rack, and with carriage including a first roll axis motor having a first gear (160) meshed with gear rack and a second roll axis motor (158) having a second gear (160) meshed with the gear rack.

9. The camera support of claim 7 with the curved track comprising a circular arc subtending less than 60 degrees.

10. The camera support of claim 1 further comprising a motor controller (128) electrically linked to the pan motor and to the tilt motor, and further comprising a pan gyro sensor (84) on the pan frame and a tilt gyro sensor (98) on the tilt frame, with the pan and tilt gyro sensors electrically linked to the motor controller.

11. The camera support of claim 1 wherein the head plate (44) is parallel to the camera mounting plate (96) and wherein the first adjustable length pan arm is parallel to the first adjustable length tilt arm and perpendicular to the head plate.

12. The camera support of claim 1 wherein the first and second adjustable length pan arms are adjustable over a length range of 10-25 cm and the first and second adjustable length tilt arms are adjustable over a length range of 5-15 cm.

## Patentansprüche

1. Ein Kameraträger (20) mit einer Abstütznabe (40), einem Schwenkrahmen (34), welcher schwenkbar an der Abstütznabe (40) angebracht ist, wobei der Schwenkrahmen (34) eine Kopfplatte (44) aufweist, welche ein erstes Ende und ein zweites Ende aufweist, einem ersten Schwenkarm (36), der an dem ersten Ende der Kopfplatte angebracht ist, und einem zweiten Schwenkarm (38), der an dem zweiten Ende der Kopfplatte angebracht ist, wobei sich der zweite Schwenkarm (38) im Wesentlichen parallel zu dem ersten Schwenkarm (36) erstreckt, einem Schwenkmotor (66), welcher an dem Schwenkrahmen (34) angebracht ist und derart ausgebildet ist, dass dieser den Schwenkrahmen (34) um eine Schwenkachse relativ zu der Abstütznabe (40) schwenken kann, einem Kipprahmen (88), welcher gelenkig an dem Schwenkrahmen (34) angebracht ist, wobei der Kipprahmen (88) eine Kameramontageplatte (96), einen ersten Kipparm (83), welcher an einem ersten Ende der Kameramontageplatte (96) angebracht ist, und einen zweiten Kipparm (85) aufweist, welcher an einem zweiten Ende der Kameramontageplatte (96) angebracht ist, wobei sich der zweite Kipparm im Wesentlichen parallel zu dem ersten Kipparm erstreckt, und einem Kippmötor (86), welcher an dem Kipprahmen angebracht ist und derart ausgebildet ist, dass dieser den Kipprahmen um eine Kippachse senkrecht zu der Schwenkachse kippen kann,
**dadurch gekennzeichnet, dass**:
der erste und der zweite Schwenkarm (36, 38) und der erste und der zweite Kipparm (83, 85) jeweils erste und zweite längenverstellbare Schwenkarme (36, 38) bzw. erste und zweite längenverstellbare Kipparme (83, 85) sind;
der erste längenverstellbare Schwenkarm (36) eine zentral Platte (74) aufweist, welche zwischen einer äußeren Schwenkarmplatte (72) und einer inneren Schwenkarmplatte (76) angeordnet ist;
eine Elektronikbox (65) an der Kopfplatte (44) angebracht ist, wobei der Schwenkmotor (66) im inneren der Elektronikbox (65) angeordnet ist; und
sich eine Kabelöffnung durch eine zentrale Öffnung in der Abstütznabe (40) und dem Schwenkmotor (66) erstreckt, und ein Kabelbaum durch die zentrale Öffnung verläuft und elektrisch mit der Elektronikbox (65) verbunden ist.

2. Der Kameraträger nach Anspruch 1, wobei der Kippmotor (86) an einem unteren Ende des ersten längenverstellbaren Schwenkarms (36) abgestützt ist.

3. Der Kameraträger nach Anspruch 1, wobei sich der erste Kipparm (83) parallel zu dem ersten längenverstellbaren Schwenkarm (36) erstreckt und sich der zweite längenverstellbare Kipparm (85) parallel zu dem zweiten längenverstellbaren Schwenkarm (38) erstreckt.

4. Der Kameraträger nach Anspruch 1, wobei die ersten und zweiten längenverstellbaren Kipparme (83, 85) zwischen den ersten und zweiten längenverstellbaren Schwenkarmen (36, 38) angeordnet sind.

5. Der Kameraträger nach Anspruch 1, weiter **gekennzeichnet durch** einen Schwenkverriegelungsbolzen (48) an dem Schwenkrahmen (34), welcher von einer ersten Position, in welcher sich der Schwenkverriegelungsbolzen im Eingriff mit der Abstütznabe (40) befindet und eine Bewegung des Schwenkrahmens relativ zu der Abstütznabe verhindert, in eine zweite Position bewegbar ist, in welcher der Schwenkverriegelungsbolzen außer Eingriff von der Abstütznabe gebracht ist, um eine Schwenkbewegung des Schwenkrahmens relativ zu der Abstütznabe zu ermöglichen.

6. Der Kameraträger nach Anspruch 1, weiter **gekennzeichnet durch** eine erste Schwenkrahmen-Verlängerungsstange (112), welche zwischen dem ersten längenverstellbaren Schwenkarm und dem ersten Ende der Kopfplatte angeordnet ist, und einer zweiten Schwenkarm-Verlängerungsstange (112), welche zwischen dem zweiten längenverstellbaren Schwenkarm und dem zweiten Ende der Kopfplatte angeordnet ist, wobei die erste und die zweite Schwenkarm-Verlängerungsstange einen Abstand zwischen dem ersten und dem zweiten längenverstellbaren Schwenkarm um eine Länge DD verlängert, und eine erste Plattenverlängerung (114), welche zwischen dem ersten längenverstellbaren Kipparm und dem ersten Ende der Kameramontageplatte angeordnet ist, und eine zweite Plattenverlängerung (114), welche zwischen dem zweiten längenverstellbaren Kipparm und dem zweiten Ende der Kameramontageplatte angeordnet ist, wobei die erste und die zweite Plattenverlängerungen einen Abstand zwischen dem ersten und zweiten längenverstellbaren Kipparm ebenfalls um eine Länge DD verlängern.

7. Der Kameraträger nach Anspruch 1, wobei die Kameramontageplatte einen an dem Kipprahmen (88) angebrachten Rollrahmen (130) aufweist, wobei der Rollrahmen eine Kurvenschiene (132), und einen bewegbar an der Kurvenschiene angebrachten Schlitten (146) aufweist, wobei der Schlitten einen ersten Rollachsenmotor (156, 158) aufweist, welcher derart ausgebildet ist, dass dieser den Schlitten entlang der Kurvenschiene bewegen kann.

8. Der Kameraträger nach Anspruch 7, wobei die Kurvenschiene eine Zahnstange aufweist, und der Schlitten den ersten Rollachsenmotor aufweist, welcher ein erstes Zahnrad (160) aufweist, welches mit der Zahnstange kämmt und einen zweiten Rollachsenmotor (158) aufweist, welcher ein zweites Zahnrad (160) aufweist, welches mit der Zahnstange kämmt.

9. Der Kameraträger nach Anspruch 7, wobei die Kurven-Zahnstange einen Kreissegmentbogen aufweist, welcher sich über weniger als 60° erstreckt.

10. Der Kameraträger nach Anspruch 1, weiter versehen mit einem Motorregler (128), welche elektrisch mit dem Schwenkmotor und dem Kippmotor verbunden ist, und weiter mit einem Schwenk-Gyro-Sensor (84) an dem Schwenkrahmen und einem Kipp-Gyro-Sensor (98) an dem Kipprahmen versehen ist, wobei der Schwenk- und der Kipp-Gyro-Sensor elektrisch mit dem Motorregler verbunden sind.

11. Der Kameraträger nach Anspruch 1, wobei sich die Kopfplatte (44) parallel zu der Kameramontageplatte (96) erstreckt und wobei sich der erste längenverstellbare Schwenkarm parallel zu dem ersten längenverstellbaren Kipparm sowie senkrecht zu der Kopfplatte erstreckt.

12. Der Kameraträger nach Anspruch 1, wobei der ersten und zweiten längenverstellbare Schwenkarm jeweils über einen Längenbereich von 10-25 cm und der erste und zweite längenverstellbare Kipparm jeweils um einen Längenbereich von 5-15 cm längenverstellbar sind.

## Revendications

1. Support de caméra (20) ayant un moyeu porteur (40), un cadre panoramique (34) fixé de manière pivotante au moyeu de support (40), ledit cadre panoramique (34) comprenant une plaque de bloc (44) ayant une première extrémité et une seconde extrémité, un premier bras panoramique (36) fixé à la première extrémité de la plaque de bloc, un second bras panoramique (38) fixé à la seconde extrémité de la plaque de bloc, ledit second bras panoramique (38) étant sensiblement parallèle au premier bras panoramique (36), un moteur panoramique (66) fixé au cadre panoramique (34) et conçu pour faire pivoter le cadre panoramique (34) autour d'un axe panoramique par rapport au moyeu porteur (40), un cadre d'inclinaison (88) fixé de manière pivotante au cadre panoramique (34), le cadre d'inclinaison (88) comprenant une plaque de montage de caméra (96), un premier bras d'inclinaison (83) fixé à une première extrémité de la plaque de montage de caméra (96), un second bras d'inclinaison (85) fixé à une seconde extrémité de la plaque de montage de caméra (96), le second bras d'inclinaison étant sensiblement parallèle au premier bras d'inclinaison, et un moteur d'inclinaison (86) fixé au cadre d'inclinaison et conçu pour faire pivoter le cadre d'inclinaison autour d'un axe d'inclinaison perpendiculaire à l'axe panoramique,
**caractérisé en ce que** :
les premier et second bras panoramiques (36, 38) et les premier et second bras d'inclinaison (83, 85) sont des premier et second bras panoramiques de longueur réglable (36, 38) et des premier et second bras d'inclinaison de longueur réglable (83, 85) ;
le premier bras panoramique à longueur réglable (36) comprend une plaque centrale (74) pouvant être positionnée de manière coulissante entre une plaque de bras panoramique extérieure (72) et une plaque de bras panoramique intérieure (76) ;
un boîtier électronique (65) est fixé à la plaque de bloc (44), le moteur panoramique (66) étant placé au sein du boîtier électronique (65) ; et
une ouverture de câble s'étend à travers une ouverture centrale dans le moyeu porteur (40) et le moteur panoramique (66), et un faisceau de câbles est acheminé à travers l'ouverture de câble et connecté électriquement au boîtier électronique (65).

2. Support de caméra selon la revendication 1, avec le moteur d'inclinaison (86) supporté au niveau d'une extrémité inférieure du premier bras panoramique de longueur réglable (36).

3. Support de caméra selon la revendication 1, dans lequel le premier bras d'inclinaison (83) est parallèle au premier bras panoramique de longueur réglable (36) et le second bras d'inclinaison de longueur réglable (85) est parallèle au second bras panoramique de longueur réglable (38).

4. Support de caméra selon la revendication 1, dans lequel les premier et second bras d'inclinaison de longueur réglable (83, 85) sont positionnés entre les premier et second bras panoramiques de longueur réglable (36, 38).

5. Support de caméra selon la revendication 1, **caractérisé en outre par** une goupille d'arrêt panoramique (48) sur le cadre panoramique (34) mobile entre une première position dans laquelle la goupille d'arrêt panoramique vient en prise sur le moyeu porteur (40) et empêche le mouvement du cadre panoramique par rapport au moyeu porteur, et une seconde position dans laquelle la goupille d'arrêt panoramique est dégagée du moyeu porteur pour permettre un mouvement de pivotement du cadre panoramique par rapport au moyeu porteur.

6. Support de caméra selon la revendication 1, **caractérisé en outre par** une première barre d'extension du cadre panoramique (112) entre le premier bras panoramique de longueur réglable et la première extrémité de la plaque de bloc, et une seconde barre d'extension du cadre panoramique (112) entre le second bras panoramique de longueur réglable et la seconde extrémité de la plaque de bloc, les première et seconde barres d'extension du cadre panoramique augmentant d'une dimension DD un espace entre les premier et second bras panoramiques de longueur réglable, et une première extension de plaque (114) entre le premier bras d'inclinaison de longueur réglable et la première extrémité de la plaque de montage de caméra, et une seconde extension de plaque (114) entre le second bras d'inclinaison de longueur réglable et la seconde extrémité de la plaque de montage de caméra, les première et seconde extensions de plaque augmentant également d'une dimension DD un espace entre les premier et second bras d'inclinaison de longueur réglable.

7. Support de caméra selon la revendication 1, avec la plaque de montage de caméra comprenant un cadre de roulement (130) fixé au cadre d'inclinaison (88), le cadre de roulement comprenant un rail de roulement courbe (132), et un chariot (146) mobile le long du rail de roulement courbe, le chariot comprenant au moins un moteur (156, 158) d'axe de roulement conçu pour déplacer le chariot le long du rail de roulement courbe.

8. Support de caméra selon la revendication 7, avec le rail de roulement courbe comprenant une crémaillère, et un chariot comprenant un premier moteur d'axe de roulement ayant un premier engrenage (160) en prise sur la crémaillère et un second moteur d'axe de roulement (158) ayant un second engrenage (160) en prise sur la crémaillère.

9. Support de caméra selon la revendication 7, avec le rail de roulement courbe comprenant un arc de cercle inférieur à 60 degrés.

10. Support de caméra selon la revendication 1, comprenant en outre un dispositif de commande de moteur (128) relié électriquement au moteur panoramique et au moteur d'inclinaison, et comprenant en outre un capteur gyroscopique panoramique (84) sur le cadre panoramique et un capteur gyroscopique d'inclinaison (98) sur le cadre d'inclinaison, les capteurs gyroscopiques panoramiques et d'inclinaison étant reliés électriquement au dispositif de commande du moteur.

11. Support de caméra selon la revendication 1, dans lequel la plaque de bloc (44) est parallèle à la plaque de montage de caméra (96) et dans lequel le premier bras panoramique de longueur réglable est parallèle au premier bras d'inclinaison de longueur réglable et perpendiculaire à la plaque de bloc.

12. Support de caméra selon la revendication 1, dans lequel les premier et second bras panoramiques de longueur réglable sont réglables sur une plage de longueur de 10 à 25 cm et les premier et second bras d'inclinaison de longueur réglable sont réglables sur une plage de longueur de 5 à 15 cm.
